# EUROPÄISCHE PATENTANMELDUNG

(11) **EP 0 627 479 A1**
(43) Veröffentlichungstag der Anmeldung: **07.12.1994**
(21) Anmeldenummer: 94107914.7
(22) Anmeldetag: 21.05.1994
(51) Int. Cl.: C09K 3/32, C09G 1/02, C11D 3/37, C09G 1/04

(54) **Kehrhilfsmittel**

(30) Priorität: 02.06.1993 DE 4318243
(71) Anmelder: ÖKO-TEC UMWELTSCHUTZSYSTEME GmbH, D-63579 Freigericht-Horbach (DE)
(72) Erfinder: Hilken, Hans, D-56812 Cochem/Mosel (DE)
(74) Vertreter: Oppermann, Ewald, Dipl.-Ing.

(57) **Zusammenfassung**

Es wird ein Kehrhilfsmittel zur Entfernung von Verunreinigungen unterschiedlicher Art, insbesondere von durch mineralische Öle verursachten Verunreinigungen, von festen Oberflächen vorgeschlagen. Das Kehrhilfsmittel weist an Hauptbestandteilen zerkleinerte, vernetzte und Hydrogele bildende Polymere, sogenannte Superabsorber, grenzflächenaktive Substanzen und/oder Lösungsmittel und Stoffe mit großer Oberflächenstruktur und/oder kapillarem und/oder faserigem Aufbau auf. Diese Bestandteile sind zu einem feuchten, rieselfähigen, streu- und kehrfähigen Mittel homogen vermischt. Die Herstellung unterschiedlicher Kehrhilfsmittelzusammensetzungen und Anwendungsbeispiele für das Kehrhilfsmittel sind in Beispielen demonstriert.

## Beschreibung

Die Erfindung bezieht sich auf Kehrhilfsmittel zur Entfernung von Verunreinigungen von festen Oberflächen, entsprechend dem Oberbegriff des Patentanspruchs 1.

Bekannte Kehrhilfsmittel, sogenannte Kehrpulver oder Kehrspäne (Römpps Chemielexikon 8. Aufl., Bd 3, S. 2070/2071) bestehen zumeist aus feinem Sägemehl, dem zur Staubbindung ein mineralisches Öl als Haftöl beigemischt wurde. Auch die Zumischung von Farbstoffen, von Steinsalz oder Lösungen hygroskopischer Salze (MgCl₂, CaCl₂) zur Vermeidung der Selbstentzündung, von konservierenden und geruchsverbessernden wie von bodenpflegenden Zusätzen ist üblich. Diese bekannten Kehrhilfsmittel können beim Kehren und Fegen von Böden aber nur die lästige Staubbildung verhüten und den Staub gründlich entfernen, wozu man den Boden vor der Reinigungsarbeit mit dem Kehrhilfsmittel bestreut. Andere Verunreinigungen, wie beispielsweise die besonders hartnäckigen Altölflecken, können mit den bekannten Kehrhilfsmitteln aber nicht entfernt werden.

Für die Sanierung von mit Öl, wie es typisch aus oder in Verbindung mit Kraftfahrzeugen anfällt und sogar mehr oder weniger in den festen Untergrund eingedrungen sein kann, verunreinigten festen Oberflächen stehen bisher nur folgende Methoden zur Verfügung. Die Reinigung mit Hochdruckreinigern unter Verwendung großer Mengen an heißem Wasser und Tensiden, was zu Entsorgungsproblemen führt. Ein Reinigungseffekt mit Tiefenwirkung tritt häufig auch nach mehrmaliger Anwendung nicht ein. Die mechanische Entfernung durch Sandstrahlen oder Ausstemmen. Diese Methoden verursachen gleichermaßen hohe Kosten und Entsorgungsprobleme. Allen diesen bekannten Methoden ist darüber hinaus gemeinsam, daß ihre Durchführung für Laien kaum oder häufig überhaupt nicht möglich ist.

Der Erfindung liegt daher die Aufgabe zugrunde, ein Kehrhilfsmittel bereitzustellen, das bei leichter Handhabung nicht nur Stäube bindet, sondern auch bei festhaftenden und ggf. in die Oberfläche eingedrungenen Verunreinigungen unterschiedlicher Art und unterschiedlichen Ursprungs eine intensive Reinigungswirkung entfaltet.

Die gestellte Aufgabe wird durch die kennzeichnenden Merkmale des Patentanspruchs 1 gelöst. Vorteilhafte Weiterbildungen der Erfindung sind in den Unteransprüchen angegeben und nachstehend ebenfalls erläutert.

Bei der erfindungsgemäßen besonderen Zusammensetzung des Kehrhilfsmittels sorgen die zerkleinerten, vernetzten und Hydrogele bildenden Polymere, die unter der Bezeichnung "Superabsorber" bekannt sind, für den Transport von Wasser und der oberflächenaktiven Substanzen, der Tenside, sowie ggf. weiterer Mischungsbestandteile, wie Duftstoffe. Die Tenside setzen die Oberflächenspannung herab und entfalten durch physikalische und chemische Effekte im Grenzflächenbereich eine intensive Reinigungswirkung. Lösungsmittelzusätze sind bei der Reinigung von mit Lackflecken verunreinigten Oberflächen von Vorteil. Die Stoffe mit großer Oberflächenstruktur und/oder kapillarem und/oder faserigem Aufbau verhindern Klumpenbildung des Superabsorbers, wirken abstumpfend auf die gereinigte Oberfläche und dienen als Reinigungshilfsmittel durch oberflächliche Anlagerung.

Die Anwendung des erfindungsgemäßen Kehrhilfsmittels ist denkbar einfach. Es läßt sich von Hand oder durch verteilende Streueinrichtungen, wie Streuwagen, auf die zu reinigende Oberfläche aufstreuen, auf der Oberfläche mechanisch bewegen, beispielsweise durch Borsten aus natürlichen oder synthetischen Materialien, und von Hand oder maschinell zusammenkehren und/oder absaugen. Je nach Ausmaß und Natur der Verunreinigungen kann diese Behandlung mehrfach zu wiederholen sein. Auf diese Weise lassen sich sogar Altölflecken von bzw. aus Beton entfernen. Geringer Verbrauch bei leichter Handhabung, unproblematische Entsorgung, Umweltfreundlichkeit und Sicherheit gegen Rutschgefahr zeichnen das erfindungsgemäße Kehrhilfsmittel aus, das sich aufgrund seiner Zusammensetzung auch nicht selbst entzünden kann.

Das Kehrhilfsmittel kann auch vom Endverbraucher auf seine gebrauchsfertige Konsistenz gebracht werden, indem die vorgesehene Wassermenge erst von ihm zugegeben wird. Zu diesem Zweck wird das Kehrhilfsmittel gewissermaßen als zunächst noch praktisch wasserfreies Zwischenprodukt hergestellt, verpackt, transportiert und gehandelt. In diesem Fall ist nur ein geringer Wasseranteil von etwa 7 Gewichtsprozent vorhanden, der durch andere Zuschlagstoffe, wie durch die Tenside und Duftstoffe, in die Mischung eingebracht wurde.

Das erfindungsgemäße Kehrhilfsmittel eignet sich für eine Vielzahl von Anwendungen, beispielsweise zur Altölfleckenbeseitigung auf verschiedenen Untergründen, zur Dekontamination von Verkehrsflächen, wie Parkplätzen, als Kehrhilfe in Autowerkstätten und Tankstellen, zur Staubentfernung in Produktionshallen, als Auffangmittel für Öle unter Maschinen, zur Reinigung von Öltanks, Ölwannen und anderen Behältern, zur Untergrundsanierung von z.B. Beton vor Aufbringung von Beschichtungen, zur Reinigung von durch radioaktive Substanzen verseuchten Flächen.

Das Kehrhilfsmittel hat folgende bevorzugte Zusammensetzung:
a) 30 bis 85 Gew.% zerkleinerte, vernetzte und Hydrogele bildende Polymere, die bei Einsatzbereitschaft bis zu etwa 80 Gew.% Wasser enthalten,
b) bis zu etwa 10 Gew.% grenzflächenaktive Substanzen und
c) bis zu 65 Gew.% Stoffe mit großer Oberflächenstruktur und/oder kapillarem und/oder faserigem Aufbau.

Für bestimmte Anwendungsfälle kann das Kehrhilfsmittel bis zu 30 Gew.% eines Lösungsmittels oder Lösungsmittelgemisches enthalten.

Das im Kehrhilfsmittel enthaltene und vernetzte, Hydrogele bildende Polymere ist in bekannter Weise durch Polymerisation von Acrylsäureamid und/oder Acrylsäure oder einem Salz davon in Gegenwart von bis zu 2 Gew.% Bisacrylamidoessigsäure, Trimethylolpropantriacrylat und/oder Tetraallyloxyethan hergestellt.

Die Stoffe mit großer Oberflächenstruktur und/oder kapillarem und/oder faserigem Aufbau sind vorteilhaft einzeln oder in Gemischen ausgewählt aus der Gruppe Kieselgur, Sägemehl, Sägespäne, faserförmiger oder gemahlener Zellstoff, faserförmige oder gemahlene Kunststoffe.

Das Kehrhilfsmittel kann auch neutralisierende Zusätze in einer Menge bis zu 20 Gew.% enthalten, nämlich für die Reinigung alkalisch verunreinigter Oberflächen saure Zusätze und für die Reinigung von mit Säuren verunreinigten Oberflächen alkalische Zusätze. Als alkalische Zusätze reicht die Verwendung einer einfachen Seifenlauge aus, während saure Zusätze aus einer Zitronensäurelösung oder einer zweiprozentigen Salzsäurelösung bestehen können.

An weiteren Zuschlagstoffen kann das Kehrhilfsmittel mindestens eine Substanz der aus Duftstoffen, Farbstoffen, Desinfektionsmitteln und Stabilisatoren bestehenden Gruppe enthalten.

Zur wirksamen Staubbindung bzw. Vermeidung von Staubbildung kann das Kehrhilfsmittel zweckmäßig bis zu 5 Gew.% Polyethylen-glykol enthalten.

Für die Erzielung günstiger Resultate bei der Herstellung des Kehrhilfsmittels ist es von Vorteil, wenn ihm das Wasser/Tensid/Geruchsstoffgemisch im Mischer mittels einer Zerstäuberdüse einverleibt ist.

Zur Auflockerung und Volumenvergrößerung kann das Kehrhilfsmittel in erwärmtem Zustand eingeblasene Luft enthalten.

Das Kehrhilfsmittel kann auch bis zu 30 Gew.% eines weiteren Quellmittels enthalten, beispielsweise Guar-Mehl.

Dem Kehrhilfsmittel können noch Mittel zur Verbesserung der Haltbarkeit und zur Vermeidung von Fäulnis zugesetzt sein, beispielsweise stabilisiertes Wasserstoffperoxid.

Zusammensetzung, Herstellung und Anwendung des erfindungsgemäßen Kehrhilfsmittels werden nachfolgend anhand von Beispielen näher beschrieben, von denen die Beispiele 1 bis 9 die Zusammensetzung und Herstellung betreffen, während sich die Beispiele 10 bis 22 auf unterschiedliche Anwendungen beziehen.

### Beispiel 1

Zur Herstellung einer Mischung aus Tensiden wurden 50 g Span 85 (Span = Wz der ICI America Inc. für nichtionogene, lipophile Tenside, die zu 100 % abbaubar sind), 60 g Tween 61 (Tween = Wz der ICI America Inc. für die Polyoxyethylenderivate der Sorbitanester mit gleicher Kennziffer; T.61 = Polyethoxysorbitanstearat), 40 g Antarox CO 990 (Antarox = Wz, Sortiment von Alkylphenolpolyglykolethern zur Verwendung als nichtionogene Tenside), 135 g Sulfopon K 35 (Sulfopon = Wz der Henkel AG, Alkylsulfate als Waschrohstoff und Emulgatoren für die Polymerisation; 35 %ige wässrige Lösung) und 715 g Wasser wurden nacheinander in ein Becherglas gegeben und vermischt. Anschließend wurden noch 100 g Tween 80 (Polyethoxysorbitanoleat) hinzugegeben und mit 900 g Wasser vermischt.

### Beispiel 2

Zur Herstellung eines Superabsorberbestandteils des Kehrhilfsmittels wurden in einem isolierten Gefäß 635 g Wasser und 180 g Natriumhydrogencarbonat vorgelegt, und 240 g Acrylsäure wurden unter Vermeidung eines Überschäumens zudosiert, wobei sich der Reaktionsansatz auf 10 bis 8 °C abkühlte. Es wurden dann 1,5 g Natriumdiisooctylsulfosuccinat und eine Lösung aus 2 g Genapol OX 130 (Genapol = Wz der Hoechst AG für Wasch-, Netz- und Dispergiermittel auf Basis von Alkylpolyglykolethern und Ethylenoxid-Propylenoxid-Blockpolymeren) und 2,5 g 1,1,1-Trimethylolpropantriacrylat zugegeben. Bei einer Temperatur von 8 bis 10 °C wurde als Initiator ein Redoxsystem, bestehend aus 0,2 g 2,2'-Azobisamidinopropan-dihydrochlorid, gelöst in 2,5 g Wasser, und 0,6 g Kaliumperoxodisulfat, gelöst in 20 g Wasser, und 0,05 g Ascorbinsäure, gelöst in 10 g Wasser, nacheinander zugegeben und verrührt. Der sich durch die einsetzende Polymerisation bis auf 80 °C erwärmende Reaktionsansatz wurde ohne Rühren stehen gelassen, bis ein festes Polymergel entstanden war.

1000 g dieses Polymergels wurden mechanisch zerkleinert, mit 350 g Kieselgur und 380 g einer wässrigen Lösung aus 5 g Arkopal N 110 (Arkopal N = Wz der Farbwerke Hoechst AG für Nonylphenolpolyglykolether als nichtionogene Tenside), 5 g Sulfopon, 1,5 g Span 85 und 0,5 g Alkafix Citroflor 28641 (Duftstoff der Firma Hartmann & Reimer) in einem Kneter homogen verknetet und anschließend in einem Mischer so lange gemischt, bis ein lockeres rieselfähiges, feuchtes, streu- und kehrfähiges Kehrhilfsmittel entstanden war.

### Beispiel 3

1000 g des gemäß Beispiel 2 hergestellten Polymergels wurden mechanisch zerkleinert und eine Mischung von 300 g Wasser, 3,5 g der Mischung der Tenside gemäß Beispiel 1, 1 g Limoclean (Duftstoff der Firma H & R), 0,1 g Duasyn-Direktgelb (Duasyn = Wz der Farbwerke Hoechst AG für wasserlösliche kation., saure u. substantive Farbstoffe) hinzugegeben. Der nach der Mischung pastenähnlichen Substanz wurden 350 g Kieselgur zugegeben und damit homogen vermischt, bis ein feuchtes, streu- und kehrfähiges Kehrhilfsmittel resultierte.

### Beispiel 4

1000 g des gemäß Beispiel 2 hergestellten Polymergels wurden mechanisch zerkleinert, anschließend bei Temperaturen über 80 °C in einem Kneter homogen verknetet, sodann bei Temperaturen über 80 °C getrocknet und schließlich gemahlen.
Weiterhin wurden in einem Mischer 50 g Kieselgur mit 0,06 g Duasyn-Direktgelb, 1,6 g Wasser und 1,2 g Polyethylenglykol homogen vermischt und der Mischung 100 g des gemahlenen Superabsorbers hinzugegeben und eingemischt. Die entstandene Mischung wurde in einem Mischer unter Zugabe einer wässrigen Lösung, bestehend aus 500 g Wasser und 2,4 g der Mischung der Tenside gemäß Beispiel 1, gemischt, wobei 0,1 g Alkafix Citroflor (Duftstoff der Firma H & R) zugegeben wurde, bis ein lockeres, rieselfähiges, feuchtes, streu- und kehrfähiges Kehrhilfsmittel entstanden war.

### Beispiel 5

100 g Kieselgur wurden mit 0,06 g Brillantgrün (wasserlöslicher Farbstoff der Farbwerke Hoechst AG), 1,6 g Wasser und 1,2 g Polyethylenglykol homogen vermischt und der Mischung anschließend 100 g des entsprechend Beispiel 4 gemahlenen Superabsorbers hinzugegeben und eingemischt. Die entstandene Mischung wurde in einem Mischer unter Zugabe einer wässrigen Lösung aus 2,0 g der Mischung der Tenside gemäß Beispiel 1 und 500 g Wasser gemischt, wobei 0,1 g Alkafix Citroflor (Duftstoff der Firma H & R) zugegeben wurde, bis ein lockeres, rieselfähiges, feuchtes, streu- und kehrfähiges Kehrhilfsmittel entstanden war.

### Beispiel 6

150 g Kieselgur wurden mit 0,06 g Brillantgrün, 1,6 g Wasser und 1,2 g Polyethylenglykol homogen vermischt und der Mischung anschließend 100 g des entsprechend Beispiel 4 gemahlenen Superabsorbers hinzugegeben und eingemischt. Die entstandene Mischung wurde in einem Mischer unter Zugabe einer wässrigen Lösung aus 2,4 g der Mischung der Tenside gemäß Beispiel 1 und 600 g Wasser gemischt, wobei 0,1 g Limoclean (Duftstoff der Firma H & R) zugegeben wurde, bis ein lockeres, rieselfähiges, feuchtes, streu- und kehrfähiges Kehrhilfsmittel entstanden war.

### Beispiel 7

100 g Kieselgur wurden mit 0,06 g Brillantgrün, 3 g Wasser und 1,2 g Polyethylenglykol homogen vermischt und der Mischung anschließend 100 g des entsprechend Beispiel 4 gemahlenen Superabsorbers sowie 25 g Guar-Mehl hinzugegeben und eingemischt. Die entstandene Mischung wurde in einem Mischer unter Zugabe einer wässrigen Lösung aus 3,0 g der Mischung der Tenside gemäß Beispiel 1 und 700 g Wasser gemischt, wobei 0,1 g Limoclean (Duftstoff der Firma H & R) zugegeben wurde, bis ein lockeres, rieselfähiges, feuchtes, streu- und kehrfähiges Kehrhilfsmittel entstanden war.

### Beispiel 8

70 g Zellstoff wurden mit 0,04 g Brillantgrün und 1,0 g Polyethylenglykol gemischt und der Mischung anschließend 100 g des entsprechend Beispiel 4 gemahlenen Superabsorbers hinzugegeben und eingemischt. Die entstandene Mischung wurde in einem Mischer unter Zugabe einer wässrigen Lösung aus 1,5 g der Mischung der Tenside gemäß Beispiel 1 und 500 g Wasser gemischt, wobei 1,0 g Sagrotan (Wz, bakterizides und fungizides Desinfektionsmittel mit 4-Chlor-methylphenol, 2-phenylphenol und Clorofen) und 5 g Reflex-flüssig (alkalifreier Allzweckreiniger der Firma Dr. Trippen GmbH) als Reinigungsmittel zugegeben wurden, bis ein lockeres, feuchtes, streu- und kehrfähiges Kehr-hilfsmittel entstanden war. Dieses Kehrhilfsmittel ist insbesondere für die Reinigung glatter Fußböden, wie Stein-, PVC- und versiegelter Holzfußböden, in Krankenhäusern, Fluren usw. geeignet.

### Beispiel 9

100 g eines Lösungsmittelgemisches, bestehend aus 50 g Butylacetat, 10 g Aceton, 10 g Isobutanol, 5 g Methanol und 25 g Ätha nol, wurden unter Zumischung von 140 g Wasser und 20 g Tween 80 in einem Hochdruckhomogenisator vermischt und die erhaltene Mischung anschließend mit 100 g des gemäß Beispiel 2 hergestellten, mechanisch zerkleinerten Polymergels und 100 g kurzfaseriges Polypropylen gemischt, bis ein feuchtes, rieselfähiges Kehrhilfsmittel entstanden war. Dieses Kehrhilfsmittel ist insbesondere für die Reinigung fester Oberflächen von nicht ausgehärteten Lackflecken, z.B. aus Acryl-lacken, geeignet.

### Beispiel 10

Altölfleckbeseitigung auf einem öffentlichen Parkplatz. Der Altölfleck war eiförmig und hatte etwa die Abmessungen 0,8 m mal 0,5 m. Untergrund: Beton-Verbundsteinpflaster.

Zunächst erfolgte die Entfernung von festem Öl, Staub und Sand mit Spachtel und Handfeger. Danach wurden 250 Gramm des Kehrhilfsmittels gemäß Beispiel 3 auf den Altölfleck aufgestreut und mit einem hartborstigen Besen auf der Fläche hin- und herbewegt, bis das Kehrhilfsmittel eine schwarze Färbung angenommen hatte. Aufgrund der starken Verschmutzung mußte dieser Vorgang mit jeweils frischem Kehrhilfsmittel zweimal mit gleichen Mengen wiederholt werden. Auf den jetzt wesentlich helleren Fleck wurden nochmals 100 Gramm des Kehrhilfsmittels aufgestreut und über Nacht zur Einwirkung gebracht. Das Kehrhilfsmittel wurde zur Vermeidung des Wegspülens durch Regenwasser mit einer PE-Folie abgedeckt. Am nächsten Tag wurde das Kehrhilfsmittel noch mehrfach leicht hin- und hergekehrt, wobei es sich deutlich dunkel färbte, während der Fleck wesentlich heller wurde. Eine Wiederholung mit dem Kehrhilfsmittel zwei Tage später zeigte eine nochmalige Verbesserung; von dem ursprünglich schwarzen Fleck war nur noch eine Spur zu sehen. Nach zwei Wochen wurde nochmals mit nur 100 Gramm Kehrhilfsmittel gearbeitet, wobei dieses sich wiederum verfärbte.

Der Altölfleck konnte also nach mehrmaliger Anwendung des Kehrhilfsmittels praktisch zum Verschwinden gebracht werden. Das verschmutzte Kehrhilfsmittel wurde einer Entsorgungsfirma übergeben.

### Beispiel 11

Altölfleckbeseitigung in einem öffentlichen Parkhaus. Der Altölfleck war eiförmig und hatte etwa die Abmessungen 1,2 m x 0,85 m. Untergrund: Beton mit Estrichbelag.

Zunächst erfolgte die Entfernung von festem Öl, Staub und Sand mit Spachtel und Handfeger. Danach wurden 300 Gramm des Kehrhilfsmittels gemäß Beispiel 3 aufgestreut und mit einem hartborstigen Besen auf der Fläche hin- und herbewegt, bis das Kehrhilfsmittel schwarz war. Aufgrund der starken Verschmutzung mußte dieser Vorgang zweimal mit entsprechenden Mengen wiederholt werden. Der jetzt wesentlich hellere Fleck wurde danach nochmals abgestreut, und das Kehrhilfsmittel wurde über Nacht zur Einwirkung gebracht, wobei es gegen Regen mit einer PE-Folie abgedeckt war. Das Kehrhilfsmittel wurde am nächsten Tag durch leichtes Hin- und Herkehren nochmals dunkel, während der Fleck wesentlich heller wurde. Eine Wiederholung mit dem Kehrhilfsmittel drei Tage später zeigte eine nochmalige Verbesserung. Vom ursprünglichen Fleck war jetzt nur noch eine Spur zu sehen. Nach zwei Wochen wurde die Bearbeitung mit nur 100 Gramm Kehrhilfsmittel wiederholt. Die eintretende Verfärbung des Kehrhilfsmittels zeigte eine nochmalige Wirkung.

Der Altölfleck konnte nach mehrmaliger Anwendung des Kehrhilfsmittels praktisch entfernt werden. Das verschmutzte Kehrhilfsmittel wurde einer Entsorgungsfirma übergeben.

### Beispiel 12

Altölfleckbeseitigung in einer Fahrzeughalle.
Der durch Hydrauliköl verursachte Altölfleck war eiförmig und hatte etwa die Abmessungen 0,9 m x 0,85 m. Untergrund: Beton mit Kunststoffbeschichtung.

Es wurden 200 Gramm des Kehrhilfsmittels gemäß Beispiel 6 aufgestreut und mit einem normalen Besen auf der Fläche hin- und herbewegt, bis das Kehrhilfsmittel schwarz war. Aufgrund der starken Verschmutzung wurde dieser Vorgang mit jeweils gleichen Mengen zweimal wiederholt. Eine Wiederholung mit dem Kehrhilfsmittel drei Tage später zeigte eine nochmalige Verbesserung. Der ursprüngliche Fleck war kaum noch wahrzunehmen. Nach zwei weiteren Wochen wurde der Vorgang mit nur 50 Gramm Kehrhilfsmittel wiederholt. Die Verfärbung des Kehrhilfsmittels zeigte eine nochmalige Wirkung, insbesondere weil wieder Hydrauliköl ausgetreten war.

Wie sich zeigte, ist auf beschichteten Untergründen die Entfernung eines Ölflecks mit dem Kehrhilfsmittel leicht möglich. Das verschmutzte Kehrhilfsmittel wurde einer Entsorgungsfirma übergeben.

### Beispiel 13

Dieselaltölfleckbeseitigung an einer Dieseltanksäule.

Es waren zwei eiförmige Ölflecke vorhanden, die etwa die Abmessungen 1,6 m x 1,25 m aufwiesen. Untergrund: Beton mit Estrichbelag.

Zunächst erfolgte die Entfernung von Staub, Sand und altem Bindemittel mit einem Besen. Danach wurden 200 Gramm des Kehrhilfsmittels gemäß Beispiel 4 aufgestreut und mit einem hartborstigem Besen auf der Fläche hin- und herbewegt, bis das Kehrhilfsmittel schwarz war. Die jetzt wesentlich helleren Flecke wurden nochmals mit derselben Menge Kehrhilfsmittel abgestreut, und das Kehrhilfsmittel wurde mit dem Besen auf der Fläche hin- und herbewegt, wonach die Flecke wesentlich heller waren. Eine Wiederholung mit derselben Kehrhilfsmittelmenge nach drei Tagen zeigte eine nochmalige Verbesserung. Von den ursprünglichen Flecken waren nur noch Spuren zu sehen. Nach einer Woche wurde die Behandlung mit nur 100 Gramm Kehrhilfsmittel wiederholt. Die Verfärbung des Kehrhilfsmittels zeigte eine nochmalige Wirkung. Die Behandlung wurde noch mehrfach über einen Zeitraum von 6 Monaten durchgeführt, wonach überhaupt keine alten Spuren mehr sichtbar waren.

Wie sich zeigte, sind auch Dieselölflecken je nach Verschmutzungsgrad und Alter durch mehrfache Anwendung des Kehrhilfsmittels vollständig entfernbar. Das verschmutzte Kehrhilfsmittel wurde einer Entsorgungsfirma übergeben. Auf ähnliche Weise mit denselben guten Resultaten konnten auch Öltankreinigungen und Reinigungen des Heizölkellerbodens durchgeführt werden, wobei verwendete Duftstoffe einen frischen Geruch verbreiteten.

### Beispiel 14

Altölfleckbeseitigung in einer Kfz-Werkstatt. Die gesamte Halle war mit einem Ölfilm überzogen. Unter den Hebebühnen und in den Gruben war die Ölschicht wesentlich dicker. Alle Flächen wurden bis dahin täglich mit Sägespänen abgekehrt, wobei jedoch Ölreste zurückblieben und hohe Rutschgefahr verursachten. Untergrund: rote rauhe Keramikplatten.

Es wurden 2000 Gramm des Kehrhilfsmittels gemäß Beispiel 2 auf eine Fläche von etwa 10 m x 5 m aufgestreut und mit einem breiten Besen weitergekehrt. Aufgrund der starken Verschmutzung wurde eine Gesamtfläche von nur 15 m x 10 m gereinigt. Das Kehrhilfsmittel wurde entfernt. Danach wurden nochmals 2000 Gramm desselben Kehrhilfsmittels auf eine Fläche von etwa 10 m x 10 m aufgestreut und mit einem breiten Besen weitergekehrt. Unter den Hebebühnen und in den Gruben wurde separat gereinigt, wobei 200 Gramm des Kehrhilfsmittels durch leichtes Hin- und Herkehren schwarz wurde, so daß dieser Vorgang wiederholt werden mußte. Eine Wiederholung mit dem Kehrhilfsmittel drei Tage später zeigte eine nochmalige Verbesserung. Von dem ursprünglichen Ölfilm war in der Halle nichts mehr zu sehen. Die Rutschgefahr war beseitigt, auch als Wasser aufgesprüht wurde. Die Versuche wurden nach einer Woche wiederholt, wobei ein noch besseres Ergebnis erzielt wurde, das offenbar auf den Lösungseffekt der Tenside zurückzuführen ist.

Auch auf Keramikböden läßt sich Öl je nach Verschmutzungsgrad mit mehrmaliger Erneuerung des Kehrhilfsmittels entfernen. Das verschmutzte Kehrhilfsmittel wurde einer Entsorgungsfirma übergeben.

### Beispiel 15

Altölfleckbeseitigung aus einer Garage.
Der Altölfleck war tropfenförmig und hatte etwa die Abmessungen 1 m mal 0,35 m. Untergrund: Beton ohne Estrichbelag.

Zunächst erfolgte die Entfernung von festem Öl, Staub und Sand mit Spachtel und Handfeger. Danach wurden 100 Gramm des Kehrhilfsmittels gemäß Beispiel 3 aufgestreut und mit einem hartborstigen Besen auf der Fläche hin- und herbewegt, bis das Kehrhilfsmittel schwarz war. Aufgrund der starken Verschmutzung mußte dieser Vorgang mit denselben Mengen an Kehrhilfsmittel zweimal wiederholt werden. Der danach wesentlich hellere Fleck wurde nochmals abgestreut, und das Kehrhilfsmittel wurde über Nacht zur Einwirkung gebracht. Am nächsten Tag wurde das Kehrhilfsmittel durch leichtes Hin- und Herkehren nochmals deutlich dunkler und der Fleck wesentlich heller. Eine Wiederholung mit dem Kehrhilfsmittel in derselben Menge fünf Tage später zeigte eine nochmalige Verbesserung. Vom ursprünglichen Fleck war jetzt nur noch eine Spur zu sehen. Nach weiteren zwei Wochen wurde mit einer Menge von nur 50 Gramm des Kehrhilfsmittels gearbeitet. Die Verfärbung des Kehrhilfsmittels zeigte eine nochmalige Wirkung.

Je nach Verschmutzungsgrad und Alter des Altölflecks mußte das Kehrhilfsmittel mehrfach angewendet werden. Das verschmutzte Kehrhilfsmittel wurde einer Entsorgungsfirma übergeben.

### Beispiel 16

Altölfleckbeseitigung in der Dreherei einer Maschinenfabrik. Die gesamte Halle war mit einem Bohrölemulsionsfilm überzogen. Unter den Maschinen war die Bohrölemulsionsschicht dicker. Bisher wurden täglich Kehrspäne verwendet, die jedoch Ölreste zurückließen, so daß hohe Rutschgefahr bestand. Untergrund: zum Teil rote rauhe Keramikplatten und teilweise Estrichbeton. Es wurden 2000 Gramm des Kehrhilfsmittels gemäß Beispiel 7 auf eine Fläche von etwa 10 m x 5 m ausgestreut und mit einem breiten Besen weitergekehrt. Aufgrund der starken Verschmutzung wurde eine Fläche von 20 m x 15 m gereinigt. Das Kehrhilfsmittel wurde danach entfernt. Unter den Maschinen wurde separat gereinigt, wobei jeweils 200 Gramm des Kehrhilfsmittels durch leichtes Hin- und Herkehren schwarz wurden, so daß dieser Vorgang wiederholt werden mußte. Eine Wiederholung mit derselben Menge des Kehrhilfsmittels zeigte eine nochmalige Verbesserung. Danach war von dem ursprünglichen Ölfilm in der Halle nichts mehr zu sehen. Die Rutschgefahr war beseitigt, auch als Wasser aufgesprüht wurde. Die Behandlung wurde dann täglich mit noch besserem Ergebnis wiederholt, was vermutlich auf den Lösungseffekt der Tenside zurückzuführen ist.

Je nach Verschmutzungsgrad auf der Oberfläche und der eintretenden Verschmutzung des Kehrhilfsmittels mußte der Arbeitsgang erneuert werden. Die Zeitersparnis war erheblich, und es wurde im Laufe der Zeit wesentlich weniger Kehrhilfsmittel benötigt. Die immer geringer werdenden Mengen wurden einer Entsorgungsfirma übergeben.

### Beispiel 17

Staubbeseitigung in einer Wellpappenfabrik.
Der gesamte Hallenboden war mit einer Staubschicht überzogen. Unter den Maschinen und in den Ecken war die Staubschicht dicker. Untergrund: grober Beton ohne Estrichbelag. Bisher wurden täglich Kehrspäne verwendet, die jedoch Staubreste zurückließen, so daß der Staubanfall größer wurde.

Zunächst wurden 2000 Gramm des Kehrhilfsmittels gemäß Beispiel 5 auf eine Fläche von etwa 10 m x 5 m ausgestreut und mit einem breiten Besen weitergekehrt. Aufgrund der starken Verschmutzung mit Staub wurde eine Fläche von 20 m x 20 m gereinigt, wonach das Kehrhilfsmittel entfernt wurde. Danach wurden nochmals 2000 Gramm des Kehrhilfsmittels auf eine Fläche von etwa 10 m x 5 m aufgestreut und mit einem breiten Besen weitergekehrt. Unter den Maschinen und in den Ecken wurde der Staub mit Schaufeln aufgenommen.

Wie sich zeigte, mußte je nach Verschmutzungsgrad der Oberfläche und des Kehrhilfsmittels dieses gegebenenfalls erneuert werden. Nach regelmäßiger Anwendung wurde der jeweils anfallende Staub im wesentlichen entfernt. Das verschmutzte Kehrhilfsmittel wurde in den Hausmüll gegeben. Die Entsorgungsmenge konnte gegenüber den früher verwendeten Kehrspänen wesentlich vermindert werden.

### Beispiel 18

Staubbeseitigung in einer Montagehalle.
Der gesamte Hallenboden war mit Staub, z.T. Stahl-Trennschleiferstaub, und Ölflecken überzogen. Untergrund: Beton, zum Teil mit Estrichbelag. Bisher wurden täglich Kehrspäne verwendet, die jedoch Staubreste zurückließen, so daß nach kurzer Zeit ein erheblicher Staubanfall zu verzeichnen war, der auch nicht durch eine wöchentliche Grundreinigung mit Kehrspänen zu beseitigen war.

Es wurden 2000 Gramm des Kehrhilfsmittels gemäß Beispiel 5 auf eine Fläche von etwa 10 m x 5 m ausgestreut und mit einem breiten Besen weitergekehrt. Aufgrund der starken Verschmutzung mit Staub konnte mit dieser Menge des Kehrhilfsmittels nur eine Fläche von etwa 20 m x 20 m gereinigt werden, wonach das stark verschmutzte Kehrhilfsmittel entfernt wurde. Danach wurden nochmals 2000 Gramm des Kehrhilfsmittels auf eine Fläche von etwa 10 m x 5 m ausgestreut und wiederum mit einem breiten Besen weitergekehrt.

Nach dieser Behandlung war der Boden praktisch staubfrei. Nach Aussagen der bisher für die Reinigung verantwortlichen Mitarbeiter war die mit dem Kehrhilfsmittel erzielte Zeitersparnis enorm. Je nach Verschmutzungsgrad der Oberfläche und des Kehrhilfsmittels war die Reinigung gegebenenfalls zu erneuern. Gegenüber den früher verwendeten Kehrspänen wurde die Entsorgungsmenge erheblich verringert. Das verschmutzte Kehrhilfsmittel wurde wegen des Ölanteils einer Entsorgungsfirma übergeben.

### Beispiel 19

Entfernung von Betonstaub und Montageölen vor der Beschichtung des Bodens eines Lagerraums, dessen Abmessungen etwa 60 m x 25 m betrugen. Untergrund: Beton.

Zunächst wurden 5000 Gramm des Kehrhilfsmittels gemäß Beispiel 7 aufgestreut und mit einem normalen Besen auf der Fläche gekehrt, bis wieder eine Staubentwicklung beim Kehren beobachtet werden konnte.

Es zeigte sich, daß mit dieser einmaligen Behandlung der Staub so weitgehend entfernt war, daß unmittelbar die Kunststoffbeschichtung aufgetragen werden konnte. Das verschmutzte Kehrhilfsmittel wurde einer Entsorgungsfirma übergeben.

### Beispiel 20

Beseitigung der Dekontamination bei einem Schaden mit Salzsäure in einer Halle. Ein Teil der Halle war mit Salzsäure kontaminiert, deren Hauptmenge von der Feuerwehr entfernt worden war. Reste der Salzsäure blieben jedoch zurück. Untergrund: rote rauhe Keramikplatten.

Zunächst wurden 2000 Gramm des Kehrhilfsmittels gemäß Beispiel 4, jedoch ohne Tenside, aber mit Zusatz von 200 g einer alkalischen Lauge (1 % Natronlauge), auf eine Fläche von etwa 5 m x 5 m aufgestreut und mit einem breiten Besen weitergekehrt. Nach Entfernung des verwendeten Kehrhilfsmittels wurden nochmals 2000 Gramm des Kehrhilfsmittels derselben Zusammensetzung auf die Fläche von etwa 5 m x 5 m aufgestreut und mit einem breiten Besen weitergekehrt und anschließend ebenfalls entfernt.

Nach dieser Behandlung war die Salzsäure in der Halle restlos entfernt, wie versuche mit Indikatorpapier erwiesen haben. Die Verätzungsgefahr und die Geruchsbelästigung waren damit beseitigt. Durch die leicht alkalische Lösung im Kehrhilfsmittel wurde der Untergrund wirksam neutralisiert. Das verschmutzte Kehrhilfsmittel wurde einer Entsorgungsfirma übergeben.

### Beispiel 21

Beseitigung der Dekontamination bei einem Schaden mit Natronlauge in einer Halle.
Ein Teil der Halle war mit Natronlauge kontaminiert, deren Hauptmenge durch den Betrieb entfernt worden war, wonach auf dem Untergrund aber noch ein Rest der stark alkalisch reagierenden Natronlauge vorhanden war. Untergrund: rauhe Keramikplatten (Chemiekeramik).

Zunächst wurden 300 Gramm des Kehrhilfsmittels gemäß Beispiel 6, jedoch ohne Tenside, aber mit einem Zusatz von 100 Gramm einer einprozentigen Salzsäurelösung, auf eine Fläche von etwa 8 m x 5 m ausgestreut und mit einem breiten Besen weitergekehrt. Das gebrauchte Kehrhilfsmittel wurde entfernt, worauf nochmals 2000 Gramm des genannten Kehrhilfsmittels auf die Fläche von etwa 8 m x 5 m ausgestreut und mit einem breiten Besen weitergekehrt wurden.

Nach dieser Behandlung konnte die ursprünglich vorhandene Natronlauge in der Halle durch Indikatorpapier nicht mehr nachgewiesen werden. Die Verätzungsgefahr und die Rutschgefahr waren beseitigt. Durch die leicht saure Lösung im Kehrhilfsmittel wurde der Untergrund wirksam neutralisiert. Das verschmutzte Kehrhilfsmittel wurde einer Entsorgungsfirma übergeben.

### Beispiel 22

Beseitigung von Altölflecken und Farbstoffresten in einem Container.

Die Verschmutzung war im gesamten Containerraum verhältnismäßig gleichmäßig in einer etwa 1 mm dicken Schicht vorhanden. Die Ölflecke waren von Hydrauliköl verursacht, die Farbreste waren aus undichten Fässern entstanden. Untergrund: Holzbohlen.

Zunächst wurden 2000 Gramm des Kehrhilfsmittels gemäß Beispiel 7 aufgestreut und mit einem normalen Besen auf der Fläche hin- und herbewegt, bis das Kehrhilfsmittel schwarz geworden war. Aufgrund der starken Verschmutzung mußte nach Entfernung des Kehrhilfsmittels die Behandlung zweimal mit entsprechenden Mengen des Kehrhilfsmittels wiederholt werden, worauf die Verschmutzung im wesentlichen bereits beseitigt war. Eine Wiederholung der Be handlung mit 2000 Gramm des lösungsmittelhaltigen Kehrhilfsmittels gemäß Beispiel 9 zeigte eine nochmalige Verbesserung.

Wie sich zeigte, ist mit dem Kehrhilfsmittel auch auf Holzböden die Entfernung von Flecken aus Öl und Farbresten möglich. Das verschmutzte Kehrhilfsmittel wurde einer Entsorgungsfirma übergeben.

## Patentansprüche

1. Kehrhilfsmittel zur Entfernung von Verunreinigungen von festen Oberflächen, bestehend aus einer Mischung verschiedener Substanzen, **gekennzeichnet durch** folgende Hauptbestandteile:
a) zerkleinerte, vernetzte und Hydrogele bildene Polymere,
b) grenzflächenaktive Substanzen und/oder Lösungsmittel und
c) Stoffe mit großer Oberflächenstruktur und/oder kapillarem und/oder faserigem Aufbau,
die zu einem feuchten, rieselfähigen, streu- und kehrfähigen Mittel homogen vermischt sind.

2. Kehrhilfsmittel nach Anspruch 1, **gekennzeichnet durch** folgende Zusammensetzung:
a) 30 bis 85 Gew.% zerkleinerte, vernetzte und Hydrogele bildende Polymere, die bei Einsatzbereitschaft bis zu etwa 80 Gew.% Wasser enthalten,
b) bis zu etwa 10 Gew.% grenzflächenaktive Substanzen und
c) bis zu 65 Gew.% Stoffe mit großer Oberflächenstruktur und/oder kapillarem und/oder faserigem Aufbau.

3. Kehrhilfsmittel nach Anspruch 1, **dadurch gekennzeichnet**, daß es bis zu 30 Gew.% eines Lösungsmittels oder Lösungsmittelgemisches enthält.

4. Kehrhilfsmittel nach mindestens einem der Ansprüche 1 bis 3, **dadurch gekennzeichnet**, daß das vernetzte, Hydrogele bildende Polymere durch Polymerisation von Acrylsäureamid und/oder Acrylsäure oder einem Salz davon in Gegenwart von bis zu 2 Gew.% Bisacrylamidoessigsäure, Trimethylolpropantriacrylat und/oder Tetraallyloxyethan hergestellt ist.

5. Kehrhilfsmittel nach mindestens einem der Ansprüche 1 bis 4, **dadurch gekennzeichnet**, daß die Stoffe mit großer Oberflächenstruktur und/oder kapillarem und/oder faserigem Aufbau einzeln oder in Gemischen ausgewählt sind aus der Gruppe Kieselgur, Sägemehl, Sägespäne, faserförmiger oder gemahlener Zellstoff, faserförmige oder gemahlene Kunststoffe.

6. Kehrhilfsmittel nach mindestens einem der Ansprüche 1 bis 5, **dadurch gekennzeichnet**, daß es neutralisierende Zusätze in einer Menge bis zu 10 Gew.% enthält.

7. Kehrhilfsmittel nach Anspruch 6, **dadurch gekennzeichnet**, daß alkalische Zusätze aus einer Seifenlauge und saure Zusätze aus einer Zitronensäurelösung oder einer 2 %igen Salzsäurelösung bestehen.

8. Kehrhilfsmittel nach mindestens einem der Ansprüche 1 bis 7, **dadurch gekennzeichnet**, daß ihm mindestens eine Substanz der aus Duftstoffen, Farbstoffen, Desinfektionsmitteln und Stabilisatoren bestehenden Gruppe einverleibt ist.

9. Kehrhilfsmittel nach mindestens einem der Ansprüche 1 bis 8, **dadurch gekennzeichnet**, daß es bis zu 10 Gew.% Polyethylenglykol enthält.

10. Kehrhilfsmittel nach mindestens einem der Ansprüche 1 bis 9, **dadurch gekennzeichnet**, daß ihm das Wasser/Tensid/Geruchsstoffgemisch im Mischer mittels einer Zerstäuberdüse einverleibt ist.

11. Kehrhilfsmittel nach mindestens einem der Ansprüche 1 bis 10, **dadurch gekennzeichnet**, daß es zur Auflockerung und Volumenvergrößerung eingeblasene Luft enthält.

12. Kehrhilfsmittel nach mindestens einem der Ansprüche 1 bis 11, **dadurch gekennzeichnet**, daß es bis zu 30 Gew.% eines weiteren Quellmittels, beispielsweise Guar-Mehl, enthält.

13. Kehrhilfsmittel nach mindestens einem der Ansprüche 1 bis 12, **dadurch gekennzeichnet**, daß ihm Mittel zur Verbesserung der Haltbarkeit und zur Vermeidung von Fäulnis, beispielsweise stabilisiertes Wasserstoffperoxid, zugesetzt ist.
